## Europäisches Patentamt

## European Patent Office

## Office européen des brevets

(19)

(11) Veröffentlichungsnummer: **0 230 526
B1**

(12) **EUROPÄISCHE PATENTSCHRIFT**

(45) Veröffentlichungstag der Patentschrift:
**10.01.90**

(51) Int. Cl.⁴: **F02M 37/10**

(21) Anmeldenummer: **86114753.6**

(22) Anmeldetag: **23.10.86**

(54) **Lagerung einer Kraftstoffpumpe im Kraftstoffvorratsbehälter eines Kraftfahrzeugs.**

(30) Priorität: **24.01.86 DE 3602135**

(43) Veröffentlichungstag der Anmeldung:
**05.08.87 Patentblatt 87/32**

(45) Bekanntmachung des Hinweises auf die Patenterteilung:
**10.01.90 Patentblatt 90/2**

(84) Benannte Vertragsstaaten:
**ES FR GB IT SE**

(56) Entgegenhaltungen:
**DE-A- 2 735 917
DE-A- 2 750 081
GB-A- 2 054 755
US-A- 4 309 155**

**Patent Abstracts of Japan, Band 8,
Nr. 258 (M-340)(1695), 27. November 1984; &
JP-A-59131761 (Nissan) 28.07.1984
Deutsche Norm, DIN ISO 1629, Oktober 1981**

(73) Patentinhaber: **Bayerische Motoren Werke
Aktiengesellschaft, Patentabteilung
AJ-3 Postfach 40 02 40 Petuelring 130,
D-8000 München 40(DE)**

(72) Erfinder: **Geupel, Helmut, Dr., Sonnenlängs 10a,
D-8024 Oberhaching(DE)**

(74) Vertreter: **Dexheimer, Rolf, Bayerische Motoren Werke
Aktiengesellschaft Postfach 40 02 40 Petuelring 130 -
AJ-31, D-8000 München 40(DE)**

**Beschreibung**

Die Erfindung bezieht sich auf die Lagerung einer in den Kraftstoff des Kraftstoffvorratsbehälters eines Kraftfahrzeuges getauchten, elektrisch angetriebenen Kraftstoffpumpe nach dem Oberbegriff des Anspruchs 1.

Elektrisch angetriebene Kraftstoffpumpen, die in den Kraftstoff des Kraftstoffvorratsbehälters eines Kraftfahrzeuges eingetaucht sind, werden auch als Intankpumpen bezeichnet. Bei Kraftfahrzeugen mit einer Einspritzanlage wird die Intankpumpe im allgemeinen in dem sogenannten Dralltopf angeordnet, in den der heiße Rücklauf von der Einspritzanlage strömt, um zu entgasen. Die Intankpumpe kann jedoch auch in dem Beruhigungstopf eines Kraftstoffvorratsbehälters angeordnet sein.

Um die Pumpengeräusche in möglichst geringem Maße an den Kraftstoffvorratsbehälter weiterzuleiten, muß die Intankpumpe an dem Pumpenträger, also dem Drallkopf oder dem Beruhigungstopf, schwingungsgedämpft, d.h. elastisch gelagert werden.

Dazu werden Dämpfungselemente aus kraftstoffesten Kunststoffen wie Acrylnitril-Butadien-Kautschuk (NBR) oder Copolymere aus Ethylenoxid und Chlormetylociran (ECO) verwendet, die relativ preiswert sind. Die Befestigung der Pumpe am Pumpenträger kann beispielsweise so erfolgen, daß am Pumpengehäuse Arme vorgesehen sind, die auf dem Pumpenträger unter Zwischenschaltung derartiger Dämpfungselemente, z.B. in Form einer Scheibe, aufliegen.

Die erwähnten preiswerten Kunststoffe haben jedoch den Nachteil, daß sia im Kraftstoff quellen, und zwar mit Quellwerten von 30 bis 50%. Bei der geschilderten Befestigung der Pumpe am Pumpenträger führt dies dazu, daß sich der Abstand der Pumpe gegenüber dem Boden des Kraftstoffvorratsbehälters ändert, also sich beim Quellen der Dämpfungselemente die Absaughöhe vergrößert und damit das gesamte Kraftvolumen im Vorratsbehälter nicht mehr genutzt werden kann. Man ist daher gezwungen, Dämpfungselemente relativ geringer Stärke und damit entsprechend geringer Geräuschdämpfung zu verwenden.

Wenn andererseits die Dämpfungselemente konzentrisch zwischen dem Pumpengehäuse und der Innenwand des Drall- oder Beruhigungstopfes eingeklemmt werden, führt ein Quellen dazu, daß sie sich stärker verspannen, wodurch die Geräuschdämpfung herabgesetzt wird und darüber hinaus die Pumpe in dem Topf eine Schrägstellung erfahren kann.

Um eine ausreichende Geräuschdämpfung zu erzielen, mußte man deshalb bisher auf Kunststoffe ausweichen, die geringe Quellwerte aufweisen, beispielsweise VITON® von der Firma Dupont, (ein Fluorelastomeres auf der Basis von Vinylidenfluorid-Hexafluorpropylen-Copolymerisaten). Derartige Kunststoffe sind jedoch sehr teuer.

Der Erfindung, wie sie in den Ansprüchen gekennzeichnet ist, liegt daher die Aufgabe zugrunde, für eine Intankpumpe eine Lagerung anzugeben, die mit geringen Kosten zu einer zufriedenstellenden Geräuschdämpfung führt.

Nach der Erfindung wir die Pumpe mit dem Pumpenträger also über Stege verbunden, die sich in einer Richtung erstrecken, die von der Radialen abweicht, die durch die Längsachse der Kraftstoffpumpe bestimmt wird. Beim Quellen der Dämpfungselemente bzw. Stege wird dadurch der Pumpe eine Drehbewegung um ihre Längsachse·erteilt, die jedoch weder die Absaughöhe der Pumpe über dem Tankboden beeinflußt, noch die Geräuschdämpfung herabsetzt. Das heißt, mit der Erfindung wird eine gute Dämpfung bei gleichbleibender Absaughöhe der Intankpumpe erreicht.

Aus der US-A 4 309 155 ist es zwar schon bekannt, an einem Dämpfungselement zwischen Kraftstoffpumpe und Pumpenträger Stege auszubilden, die schräg zu einer von der Pumpenachse ausgehenden Radialen verlaufen. Die Stege bilden jeweils schmale etwas nach außen gekrümmte Rippen eines Rippenpaares. Eine Rippe eines Rippenpaares erstreckt sich dabei im entgegengesetzten Winkel von der Radialen als die andere. Die äußeren Enden der schmalen Rippen liegen an der Umfangswandung des Pumpenträgers jedoch lediglich an. Die Rippen können daher keinerlei Tragfunktion ausüben. Insbesondere auch deshalb, weil sich jeweils zwei Rippen in entgegengesetzter schräger Richtung zu dem Pumpenträger erstrecken, können sie auch nicht die mit der erfindungsgemäßen Anordnung der Stege gewollte Verdrehung der Kraftstoffpumpe bewirken.

Nachstehend ist eine Ausführungsform der Erfindung anhand der Zeichnung näher erläutert. Darin zeigen:

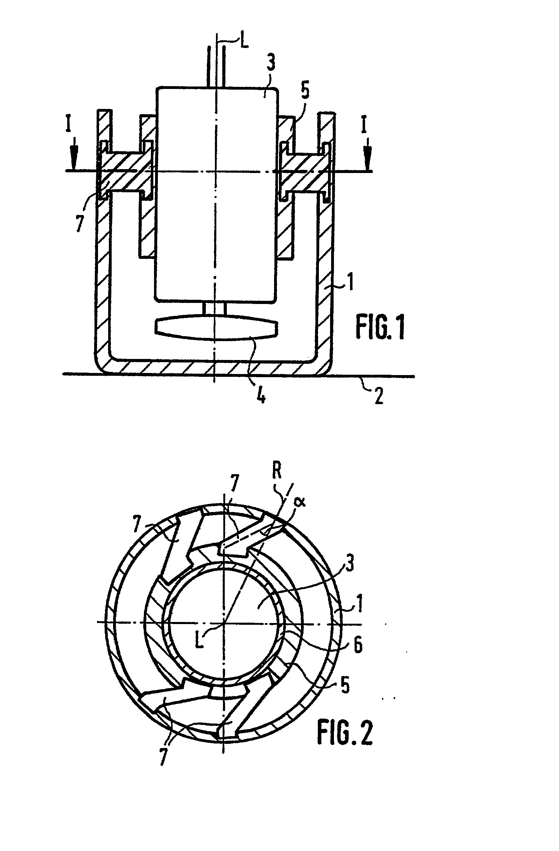

Fig. 1 einen Längsschnitt durch eine Intankpumpe im Dralltopf eines Fahrzeug-Kraftstoffvorratsbehälters; und

Fig. 2 einen Schnitt entlang der Linie I–I in Fig. 1, wobei von der Intankpumpe lediglich das Gehäuse gezeigt ist.

Nach der Zeichnung ist ein Dralltopf 1 am Boden 2 eines Kraftstoffvorratsbehälters angeordnet. Im Dralltopf 1 befindet sich die Intankpumpe 3 mit einem Filter 4 an der unteren, d.h. der Saugseite der Pumpe 3. Die Pumpe 3 ist in einer hülsenförmigen Aufnahme 5 angeordnet, welche an dem Gehäuse der Pumpe 3 befestigt ist.

Der Dralltopf 1 dient als Träger der Pumpe 3. Zur elastischen Lagerung der Pumpe 3 erstrecken sich mehrere Stege 7 von der Pumpe 3 zum Dralltopf 1. Die Stege 7 bestehen aus elastischem Material, z.B. aus Acrylnitril-Butadien-Kautschuk (NBR) oder aus Copolymeren aus Ethylenoxid und Chlormethyloxiran (ECO).

Die einzelnen Stege 7 sind identisch ausgebildet, d.h. gleich lang und von gleichem Querschnitt. Sie zeichnen sich dadurch aus, daß sie sich von der Pumpe 3 zu dem Dralltopf 1 in einer Richtung erstrecken, die die Radiale R, die durch die Längsachse L der Pumpe 3 bestimmt wird, mit einem Winkel $\alpha$ schneidet, der größer als null ist, vorzugsweise mehr als 10° beträgt. Der Winkel $\alpha$ ist dabei für

sämtliche Stege 7 der gleiche. In dem in der Zeichnung dargestellte Ausführungsbeispiel erstrecken sich also die Stege 7 mit einem Winkel α von etwa 40° in tangentialer Richtung, bezogen auf die Aufnahme 5 bzw. das Pumpengehäuse 6.

Auf diese Weise wird beim Quellen der Stege 7 der Pumpe 3 eine Drehbewegung um ihre Längsachse L erteilt. Dadurch bleibt der Abstand der Pumpe 3 bzw. des Filters 4 gegenüber dem Boden 2 des Kraftstoffvorratsbehälters unverändert. Die Stege 7 können deshalb relativ groß, d.h. mit großem Dämpfungsvolumen ausgebildet werden, so daß eine hohe Geräuschdämpfung realisierbar ist. Zugleich tritt beim Quellen der Stege 7 keine Verspannung derselben auf, so daß deren Geräuschdämpfungseigenschaften durch den Quellvorgang nicht beeinflußt werden.

## Patentansprüche

1. Lagerung einer in den Kraftstoff des Kraftstoffvorratsbehälters eines Kraftfahrzeuges getauchten, elektrisch angetriebenen Kraftstoffpumpe (3) an einem im Kraftstoffvorratsbehälter befestigten Pumpenträger (1) über ein Dämpfungselement, das Stege (7) etwa gleicher Länge aus elastischem Material umfaßt, die winkelig zu einer von der Längsachse der Kraftstoffpumpe (3) ausgehenden Radialen angeordnet sind und von der Kraftstoffpumpe (3) zum Pumpenträger (1) verlaufen, dadurch gekennzeichnet, daß die Stege (7) jeweils direkt oder unter Zwischenschaltung einer Aufnahme (5) einerseits mit der Kraftstoffpumpe (3) ausgehenden Radialen angeordnet sind und von der Kraftstoffpumpe (3) zum Pumpenträger (1) verlaufen, dadurch gekennzeichnet, daß die Stege (7) jeweils direkt oder unter Zwischenschaltung einer Aufnahme (5) einerseits mit der Kraftstoffpumpe (3) und anderseits mit dem Pumpenträger (1) verbunden sind und sämtliche mit etwa gleichem Winkel (α) zu der Radialen (R) angeordnet sind.

2. Lagerung nach Anspruch 1, dadurch gekennzeichnet, daß die Stege (7) etwa den gleichen Querschnitt aufweisen.

3. Lagerung nach Anspruch 1 oder 2, dadurch gekennzeichnet, daß die Kraftstoffpumpe (3) ein zylindrisches Gehäuse (6) aufweist und sich die Stege (7) im wesentlichen tangential zu dem Gehäuse (6) erstrecken.

4. Lagerung nach Anspruch 1 oder 2, dadurch gekennzeichnet, daß das elastische Material, aus dem die Stege (7) bestehen, Acrylnitril-Butadien-Kautschuk (NBR) oder ein Copolymer aus Ethylenoxid und Chlormethyloxiran (ECO) ist.

5. Lagerung nach einem der vorstehenden Ansprüche, dadurch gekennzeichnet, daß der Pumpenträger durch einen am Boden (2) des Kraftstoffvorratsbehälters angeordneten Topf gebildet wird.

6. Lagerung nach Anspruch 5, dadurch gekennzeichnet, daß der Topf ein Dralltopf (1) oder ein Beruhigungstopf ist.

## Claims

1. A mounting for an electric fuel pump (3) which is immersed in the fuel in the tank of a motor vehicle and is mounted on a pump-holder (1) secured in the tank via a damping element comprising webs (7) of resilient material and of approximately equal length and disposed at an angle to a radial line originating at the longitudinal axis of the fuel pump 3, the webs extending from the fuel pump (3) to the pump-holder (1), characterised in that each web (7) is connected at one end to the fuel pump (3) and at the other end to the pump-holder (1), either directly or with the interposition of a receiver (5), and all the webs are disposed at approximately the same angle (α) to the radial line (R).

2. A mounting according to claim 1, characterised in that the webs (7) have approximately the same cross-section.

3. A mounting according to claim 1 or 2, characterised in that the fuel pump (3) has a cylindrical casing (6) and the webs (7) extend substantially at a tangent to the casing (6).

4. A mounting according to claim 1 or 2, characterised in that the resilient material constituting the webs (7) is acrylnitrile-butadiene rubber (NBR) or a copolymer of ethylene oxide and chloromethyloxirane (ECO).

5. A mounting according to any of the preceding claims, characterised in that the pump-holder is a pot disposed at the bottom (2) of the fuel tank.

6. A mounting according to claim 5, characterised in that the pot is a twist pot (1) or a stabilising pot.

## Revendications

1. Installation d'une pompe à carburant (3) entraînée électriquement, immergée dans le carburant du réservoir d'un véhicule automobile, sur un support de pompe fixé dans le réservoir de carburant par un élément d'amortissement qui comporte des entretoises (7) de longueur à peu près égale, en matériau élastique, qui sont placées angulairement par rapport à des rayons partant de l'axe longitudinal de la pompe (3), et vont de la pompe à carburant (3) au support de pompe (1), caractérisé en ce que les entretoises (7) sont reliées chacune directement ou par une pièce intermédiaire d'un logement (5) d'un côté à la pompe à carburant (3) et de l'autre au support de pompe (1) et sont disposées toutes avec un angle (α) pratiquement identique par rapport aux rayons (R).

2. Installation selon la revendication 1, caractérisée en ce que les entretoises (7) présentent une section pratiquement identique.

3. Installation selon la revendication 2 ou 3, caractérisée en ce que la pompe à carburant (3) comporte un boîtier cylindrique (6) et que les entretoises (7) s'étendent pour l'essentiel tangentiellement à ce boîtier (6).

4. Installation selon la revendication 1 ou 2, caractérisée en ce que le matériau élastique, dont sont constituées les entretoises (7), est un caoutchouc d'acrylonitrile-butadène (NBR), ou un copolymère d'oxyde d'éthylène et de chlorométhyloxirane (ECO).

5. Installation selon l'une des revendications précédentes, caractérisée en ce que le support de pompe est formé par un pot placé sur le fond (2) du réservoir de carburant.

6. Installation selon la revendication 5, caractérisée en ce que le pot est un pot de rotation ou un pot de stabilisation.

FIG.1

FIG.2